# EUROPÄISCHE PATENTANMELDUNG

(11) **EP 3 620 278 A1**
(43) Veröffentlichungstag der Anmeldung: **11.03.2020**
(21) Anmeldenummer: 19191272.4
(22) Anmeldetag: 12.08.2019
(51) Int. Cl.: B25J 19/06, B25J 19/00, F16D 1/092

(54) **SICHERUNGSVORRICHTUNG UND VERFAHREN ZUM BETREIBEN EINER SICHERUNGSVORRICHTUNG**

(30) Priorität: 05.09.2018 DE 102018121701
(71) Anmelder: M-Robot OHG, 37194 Wahlsburg (DE)
(72) Erfinder: Brissé, Dirk, 88079 Kressbronn (DE); Bartsch, Patrick, 88074 Meckenbeuren (DE)
(74) Vertreter: Schorr, Peter Karl

(57) **Zusammenfassung**

Die Erfindung betrifft eine Sicherungsvorrichtung (2) für einen drehgelagerten Gegenstand (4), wie Manipulator, mit mindestens einer Aufnahmeeinheit (6), die an einer ersten Komponente (8) des Gegenstands (4) drehfest festgelegt ist, mit mindestens einer Klemmeinheit (10), die an einer zweiten Komponente (12) des Gegenstands (4), die manuell oder mittels eines Drehantriebs, insbesondere Direktantriebs, relativ zur ersten Komponente (8) über ein drehgelagertes Gelenk um eine Dreh- und/oder Schwenkachse (14) bewegbar ist, drehfest festgelegt ist, und mit mindestens einer Antriebseinheit (16), durch die die Klemmeinheit (10) von einer Freigabestellung, in der die erste Komponente (8) und die zweite Komponente (12) für ein Drehen relativ zueinander freigegeben sind, parallel zur Dreh- und/oder Schwenkachse (14) in eine Klemmstellung überführbar ist, in der die Klemmeinheit (10) in die Aufnahmeeinheit (6) reib- und/oder kraftschlüssig eingreift, und die erste Komponente (8) und die zweite Komponente (12) gegen ein Drehen um die Dreh- und/oder Schwenkachse (14), relativ zueinander festlegt.

## Beschreibung

Die Erfindung betrifft eine Sicherungsvorrichtung sowie ein Verfahren zum Betreiben einer Sicherungsvorrichtung.

Es sind Sicherungsvorrichtungen für Manipulatoren, wie Industrieroboter, bekannt, bei denen die Manipulatoren mittels mechanischer Getriebe ansteuerbar sind. Die Komponenten umfassen solchenfalls Manipulatorarme oder Roboterarme. Bei einem Stillstand der mechanischen Antriebe legen die Getriebe die Roboterarme bei einem Stillstand relativ zueinander fest.

Darüber hinaus sind Sicherungsvorrichtungen für Komponenten bekannt, bei denen zusätzliche Bremsen vorgesehen sind, die ähnlich wie eine Scheibenbremse flächenhaft mittels Haftreibung die Komponenten relativ zueinander festlegen.

Darüber hinaus sind Manipulatoren mit Direktantrieb bekannt, also Manipulatoren, bei denen die einzelnen Manipulatorarme elektromagnetisch angetrieben relativ zueinander bewegbar sind. Derartige Manipulatoren arbeiten meist getriebelos, was ein Festlegen der Manipulatorarme mit einer Motorbremse erschwert.

Eine Aufgabe eines Ausführungsbeispiels der Erfindung ist, eine alternative, zweckmäßige Bauform eines relativ zueinander Festlegens zweier Komponenten vorzuschlagen.

Diese Aufgabe wird gelöst durch eine Sicherungsvorrichtung für einen drehgelagerten Gegenstand, wie Manipulator, mit mindestens einer Aufnahmeeinheit, die an einer ersten Komponente des Gegenstands drehfest festgelegt ist, mit mindestens einer Klemmeinheit, die an einer zweiten Komponente des Gegenstands, die manuell oder mittels eines Drehantriebs, insbesondere Direktantriebs, relativ zur ersten Komponente über ein drehgelagertes Gelenk um eine Dreh- und/oder Schwenkachse bewegbar ist, drehfest festgelegt ist, und mit mindestens einer Antriebseinheit, durch die die Klemmeinheit von einer Freigabestellung, in der die erste Komponente und die zweite Komponente für ein Drehen relativ zueinander freigegeben sind, parallel zur Dreh- und/oder Schwenkachse in eine Klemmstellung überführbar ist, in der die Klemmeinheit in die Aufnahmeeinheit reib- und/oder kraftschlüssig eingreift, und die erste Komponente und die zweite Komponente gegen ein Drehen um die Dreh- und/oder Schwenkachse, relativ zueinander festlegt.

Dadurch, dass die Klemmeinheit parallel zur Dreh- und/oder Schwenkachse in eine Klemmstellung überführbar ist, ist die Sicherungsvorrichtung kompakt ausbildbar. Zudem ist hierdurch eine Alternative zweckmäßiger Bauformen bereitgestellt.

Bei dem drehgelagerten Gegenstand kann es sich grundsätzlich um jede Art von Gegenstand handeln, bei der eine Komponente relativ zu einer zweiten Komponente drehgelagert bewegt wird. Beispielsweise kann der Gegenstand einen Manipulator, insbesondere Industrieroboter, insbesondere mit Direktantrieb, umfassen. Solchenfalls kann die erste Komponente ein erstes Armelement eines Roboterarms umfassen und die zweite Komponente ein zweites Armelement des Roboterarms umfassen.

Darüber hinaus ist es denkbar, dass der drehgelagerte Gegenstand einen Drehtisch, eine Antriebsspindel oder Dergleichen umfasst.

Die Aufnahmeeinheit kann beispielsweise lochkranzartig ausgebildet sein. Solchenfalls wäre die Klemmeinheit in einer Mehrzahl von diskreten Klemmstellungen innerhalb der Aufnahmeeinheit anordenbar. Die Sicherungsvorrichtung arbeitet stufenlos, wenn die mindestens eine Aufnahmeeinheit, mindestens eine konzentrisch zur Dreh- und/oder Schwenkachse verlaufende und in Richtung der Dreh- und/oder Schwenkachse erstreckte Aussparung umfasst und/oder wenn die mindestens eine Klemmeinheit mindestens Klemmmittel umfasst, das in die Aussparung bewegbar und reib- und/oder kraftschlüssig unmittelbar anliegend anordenbar ist.

Um eine Aufnahme des Klemmmittels der Klemmeinheit in der Aussparung der Aufnahmeeinheit beim Überführen von der Freigabestellung in die Klemmstellung sicherzustellen, erweist es sich als vorteilhaft, wenn das mindestens Klemmmittel der Klemmeinheit auf der der Aussparung der Aufnahmeeinheit zugewandten Seite einen, insbesondere sich verjüngenden, Führungsabschnitt und/oder wenn die Aussparung der Aufnahmeeinheit auf der dem Klemmmittel der Klemmeinheit zugewandten Seite einen, insbesondere trichterartig ausgebildeten, Aufnahmeabschnitt umfasst.

Hierdurch werden Aufnahmeeinheit und Klemmeinheit automatisch zueinander zentriert, wenn das Klemmmittel in die Aussparung eingeführt wird. Darüber hinaus ist durch den trichterartigen Aufnahmeabschnitt bezüglich der Überführungsrichtung parallel zur Dreh- und/oder Schwenkachse eine erhöhte Anlagefläche zwischen Klemmmittel und Aussparung realisiert. Hierdurch sind höhere Reib- und Anlagekräfte erzielbar, wodurch die Klemmwirkung zwischen Aussparung und Klemmmittel verbessert ist.

Hierbei erweist es sich insbesondere als vorteilhaft, wenn der Führungsabschnitt des Klemmmittels und/oder der Aufnahmeabschnitt der Aussparung bezüglich der Dreh- und/oder Schwenkachse einen Winkel von 0° bis 30°, insbesondere 5° bis 25°, insbesondere 10° bis 20° umfasst und/oder wenn der Führungsabschnitt des Klemmmittels und/oder der Aufnahmeabschnitt der Aussparung eine Oberfläche und/oder eine Oberflächenbeschichtung mit einem Reibwert zwischen 0,05 und 0,8, insbesondere zwischen 0,1 und 0,5, umfasst.

Innerhalb der genannten Winkelbereiche lassen sich besonders hohe Reibwerte und hierdurch wirksame reibschlüssige Verbindung des Klemmmittels der Klemmeinheit mit der Aussparung der Aufnahmeeinheit erzielen.

Durch das Vorsehen der Oberfläche des Klemmmittels und/oder des Aufnahmeabschnitts mit einem Reibwert zwischen 0,05 und 0,8 lassen sich die wirkenden Reibkräfte zwischen Klemmmittel und Aussparung weiter erhöhen. Ergänzend oder alternativ hierzu kann die Oberfläche des Klemmmittels und/oder des Aufnahmeabschnitts mit einer zusätzlichen Oberflächenbeschichtung versehen sein, die einen entsprechenden Reibwert umfasst.

Die Oberflächenbeschichtung kann beispielsweise ein Metall, einen Kunststoff, einen Gummi und/oder Holz umfassen. Bei einer Ausführungsform umfassen Klemmmittel und Aussparung jeweils Aluminium mit einem Reibwert von 0,2 angenommen.

Die Antriebseinheit kann grundsätzlich beliebig ausgebildet sein, solange sie der technischen Funktion nachkommt, die Klemmeinheit von der Freigabestellung in die Sperrstellung zu überführen. Hierbei ist es denkbar, dass die Antriebseinheit mindestens ein pneumatisches, hydraulisches und/oder mechanisches spannbares Federmittel, insbesondere einen hydraulischen oder pneumatischen Zylinder und/oder ein Federelement, umfasst, das das mindestens eine Klemmmittel mit einer Spannkraft in die Klemmstellung spannt und/oder dass die Antriebseinheit mindestens ein pneumatisches, hydraulisches und/oder mechanisches wirksames Sperrmittel umfasst, das das mindestens eine Klemmmittel in der Freigabestellung festlegt.

Dadurch, dass die Antriebseinheit ein Federmittel umfasst, das das Klemmmittel mit einer Spannkraft in die Klemmstellung spannt, ist das Klemmmittel jederzeit von der Freigabestellung in die Klemmstellung überführbar. Dadurch, dass die Antriebseinheit das Sperrmittel umfasst, lässt sich das vorgespannte mindestens eine Klemmmittel trotz der hohen wirkenden Spannkräfte in der Freigabestellung festlegen.

Das mindestens eine Sperrmittel kann grundsätzlich beliebig ausgebildet sein, solange es der technischen Funktion nachkommt, das Klemmmittel gegen ein Überführen von der Freigabestellung in die Klemmstellung festzulegen. Beispielsweise kann das Sperrmittel bolzenartig ausgebildet sein und am Klemmmittel einen Hintergriff bezüglich der Dreh- und/oder Schwenkachse bilden.

Bei einer Weiterbildung der Antriebseinheit ist vorgesehen, dass das Sperrmittel der Antriebseinheit in einer Grundstellung eine der Spannkraft des Federmittels entgegenwirkende und gleich große Rückstellkraft umfasst, mit der das Sperrmittel auf das Klemmmittel wirkt und durch Kräftegleichgewicht in der Freigabestellung hält, und dass das Sperrmittel in einer Notstellung eine bezüglich der Grundstellung reduzierte Rückstellkraft umfasst und das Klemmmittel zum Überführen in die Klemmstellung freigibt.

Durch das Ausbilden des Sperrmittels derart, dass es mit einer Rückstellkraft der Spannkraft entgegenwirkt, umfasst das Sperrmittel gleichzeitig auch ein Rückstellmittel, wodurch das Klemmmittel durch das Sperrmittel von der Klemmstellung in die Freigabestellung überführbar ist. Solchenfalls wird die Rückstellkraft des Sperrmittels solange erhöht, bis die Rückstellkraft vom Betrag her gleich der Spannkraft des Federmittels entspricht.

Solchenfalls lässt sich das Sperrmittel technisch einfach realisieren, wenn dass das Sperrmittel ein mit Druck beaufschlagbares, hydraulisch oder pneumatisch wirksames Fluid umfasst, das in einem, insbesondere konzentrisch um die Dreh- und/oder Schwenkachse verlaufenden, zwischen Klemmmittel der Klemmeinheit und zweiter Komponente des Gegenstands angeordneten Hohlraum anordenbar oder angeordnet ist und/oder dass die Antriebseinheit eine Ringleitung und mindestens ein Ventil umfasst, durch das der Hohlraum mit der Ringleitung in Fluidverbindung bringbar ist.

In den Hohlraum kann beispielsweise einen Druck von 100 Pa wirken. Ferner ist es denkbar, dass über das Ventil und die Ringleitung ein Volumenstrom des Fluids von 40 l/min. das Sperrmittel drucklos schalten kann.

Um automatisch und schnell das Klemmmittel der Klemmeinheit von der Freigabestellung in die Klemmstellung zu überführen, erweist es sich als vorteilhaft, wenn die Sicherungsvorrichtung mindestens eine Steuereinheit umfasst, durch die zumindest die Rückstellkraft des Sperrmittels der Antriebseinheit zum Überführen des mindestens einen Klemmmittels in die Klemmstellung einstellbar ist, insbesondere durch die das Ventil zum Öffnen und Schließen ansteuerbar ist und wenn die Sicherungsvorrichtung mindestens ein, der mindestens einen Steuereinheit zuordenbares oder zugeordnetes, Sensormittel umfasst, durch das zumindest eine Auslösebedingung zum Überführen des Sperrmittels zum Überführen von der Grundstellung in die Notstellung erfassbar ist und/oder durch das ein Druck im Hohlraum erfassbar ist.

Bei der Auslösebedingung kann es sich beispielsweise um einen Not-Halt, einen Stromausfall, einen Sicherheitshalt, einen Stillstand des Manipulators einen Motorschutz, einen Ausfall des Kühlkreislaufes und/oder einen Hydraulik- und/oder Pneumatik-Ausfall handeln.

Solchenfalls ist gewährleistet, dass die erste Komponente und die zweite Komponente relativ zueinander festgelegt werden und eine Verletzungsgefahr beispielsweise einer Bedienperson, reduziert ist.

Grundsätzlich ist es denkbar, dass die Klemmeinheit ausschließlich ein einziges Klemmmittel umfasst. Bei einer Ausführungsform der Sicherungsvorrichtung ist vorgesehen, dass die Klemmeinheit eine Mehrzahl von Klemmmitteln umfasst, die an einem ringartigen Träger angeordnet sind und/oder dass die zweite Komponente eine Mehrzahl von parallel zur Dreh- und/oder Schwenkachse erstreckte durchgehende Öffnungen umfasst, in der die Mehrzahl von Klemmmitteln angeordnet sind, wobei der ringartige Träger in der Freigabestellung zur zweiten Komponente beabstandet und in der Klemmstellung bezüglich der Freigabestellung in Richtung zweiter Komponente bewegt ist und/oder an der zweiten Komponente anliegt.

Durch die zuvor beschriebene Ausgestaltung der einzelnen Komponenten ist eine einfache Kopplung der ersten Komponente mit der zweiten Komponente ermöglicht.

Darüber hinaus erweist es sich als vorteilhaft, wenn die Antriebseinheit eine Mehrzahl von Federmitteln umfasst, die kranzartig, und insbesondere konzentrisch, um die Dreh- und/oder Schwenkachse angeordnet sind und gemeinsam die Klemmeinheit, insbesondere an dem ringartigen Träger anliegend, in die Klemmstellung spannen.

Hierdurch ist eine zumindest nahezu homogene Kraftverteilung der Spannkraft der Federmittel erzielbar, wodurch die Gefahr eines Verkantens beim Überführen der Klemmeinheit von der Freigabestellung in die Klemmstellung reduziert ist.

Darüber hinaus erweist es sich bei einer Ausführungsform der Sicherungseinrichtung als vorteilhaft, wenn die mindestens eine Aufnahmeeinheit und die erste Komponente ein gemeinsames Bauteil umfassen und/oder wenn die Aufnahmeeinheit einen Flansch umfasst, der mittelbar oder unmittelbar und drehfest an der ersten Komponente lösbar oder unlösbar festlegbar oder festgelegt ist.

Hierdurch kann die Sicherungsvorrichtung kompakt ausgebildet sein.

Schließlich wird die Aufgabe gelöst durch ein Verfahren zum Betreiben einer Sicherungsvorrichtung eines drehgelagerten Gegenstands, wie Manipulator, insbesondere Industrieroboter, insbesondere mit Direktantrieb, der mindestens eine Aufnahmeeinheit, die an einer ersten Komponente des Gegenstands drehfest festgelegt ist, der mindestens eine Klemmeinheit, die an einer zweiten Komponente des Gegenstands, die manuell oder mittels eines Drehantriebs, insbesondere Direktantriebs, relativ zur ersten Komponente über ein drehgelagertes Gelenk um eine Dreh- und/oder Schwenkachse bewegbar ist, drehfest festgelegt ist, und der mindestens eine Antriebseinheit umfasst, mit den Schritten:
a. Erfassen einer Auslösebedingung durch ein der Steuereinheit zugeordnetes Sensormittel;
b. Ansteuern der Antriebseinheit zum Überführen der Klemmeinheit von einer Freigabestellung, in der die erste Komponente und die zweite Komponente für ein Bewegen, insbesondere Drehen, relativ zueinander freigegeben sind, in eine Sperrstellung, in der die Klemmeinheit in die Aufnahmeeinheit reib- und/oder kraftschlüssig eingreift, und die erste Komponente und die zweite Komponente gegen ein Bewegen relativ zueinander festlegt.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Sicherungsvorrichtung sowie des Verfahrens.

In der Zeichnung zeigt:
- Figur 1: Eine perspektivische geschnittene Vorderansicht auf ein Ausführungsbeispiel der Sicherungsvorrichtung;
- Figur 2: Eine geschnittene Detailansicht der Klemmeinheit, der Aufnahmeeinheit und der Antriebseinheit der Sicherungsvorrichtung gemäß Figur 1;
- Figur 3: Eine geschnittene perspektivische Detailansicht der Klemmeinheit der Sicherungsvorrichtung gemäß Figur 1
- Figur 4: Ein schematisches Ablaufdiagramm des erfindungsgemäßen Verfahrens.

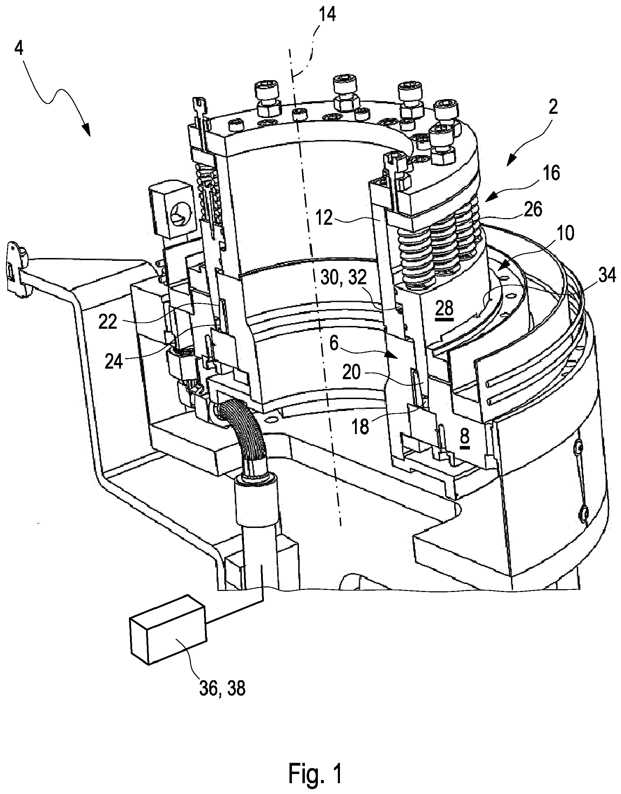

Figur 1 zeigt eine insgesamt mit dem Bezugszeichen 2 versehene Sicherungsvorrichtung für einen drehgelagerten Gegenstand 4. Bei dem Gegenstand 4 kann es sich um einen Manipulator, beispielsweise mit einem Direktantrieb, handeln.

Die Sicherungsvorrichtung 2 umfasst eine Aufnahmeeinheit 6, die an einer ersten Komponente 8 des Gegenstands 4 drehfest festgelegt ist. Darüber hinaus umfasst die Sicherungsvorrichtung 2 eine Klemmeinheit 10, die an einer zweiten Komponente 12 des Gegenstands 4 festgelegt ist. Die zweite Komponente 12 ist manuell oder mittels eines Drehantriebs, insbesondere Direktantriebs, relativ zur ersten Komponente 8 über ein drehgelagertes Gelenk um eine Dreh- und/oder Schwenkachse 14 bewegbar.

Darüber hinaus umfasst die Sicherungsvorrichtung 2 eine Antriebseinheit 16, die die Klemmeinheit 10 in einer Freigabestellung, in der die erste Komponente 8 und die zweite Komponente 12 für ein Drehen relativ zueinander freigegeben sind, parallel zur Dreh- und/oder Schwenkachse 14 in eine Klemmstellung überführbar ist, in der die Klemmeinheit 10 in die Aufnahmeeinheit 6 reib- und/oder kraftschlüssig eingreift. In der zweiten Funktionsstellung ist die erste Komponente 8 und die zweite Komponente 12 gegen ein Drehen um die Dreh- und/oder Schwenkachse 14 relativ zueinander festgelegt.

Bei dem in den Figuren gezeigten Ausführungsbeispiel der Sicherungsvorrichtung 2 umfasst die Aufnahmeeinheit 6 eine Aussparung 18, die konzentrisch zur Dreh- und/oder Schwenkachse 14 verläuft. Bei den in den Figuren gezeigten Ausführungsbeispiel ist die Aussparung 18 und die Aufnahmeeinheit 6 einstückig mit der ersten Komponente 8 ausgebildet.

Darüber hinaus umfasst die Klemmeinheit 10, bei dem in den Figuren gezeigten Ausführungsbeispiel eine Vielzahl von Klemmmitteln 20, die in die Aussparung 18 bewegbar und dort reib- und/oder kraftschlüssig unmittelbar in der Aussparung anliegend, anordenbar sind.

Um ein Anordnen der Klemmmittel 20 in den Aussparungen 18 zu erleichtern, umfassen die Klemmmittel 20 einen sich verjüngenden Führungsabschnitt 22 und die Aussparung 18, auf der dem Klemmmittel 20 der Klemmeinheit 10 zugewandten Seite eine insbesondere sichtartig ausgebildeten Aufnahmeabschnitt 24.

Bei dem in den Figuren gezeigten Ausführungsbeispiel der Sicherungsvorrichtung 2 umfasst die Antriebseinheit 16 eine Mehrzahl von Federmitteln 26, die einerseits an der zweiten Komponente 12 des Gegenstands 4 abgestützt sind und sich andererseits an einem ringartigen Träger 28 der Klemmeinheit 10 abstützen. An dem ringartigen Träger 28 der Klemmeinheit 10, sind die Mehrzahl von Klemmmitteln 20 angeordnet.

Um die Klemmeinheit 10 in der Freigabestellung zu halten, umfasst die Sicherungsvorrichtung 2 ein Sperrmittel 30, das bei dem in den Figuren gezeigten Ausführungsbeispiel durch ein hydraulisch wirksames Fluid gebildet ist. Dieses ist in einem Hohlraum 32 angeordnet, der zwischen der zweiten Komponente 12 und dem Träger 28 der Klemmeinheit 10 gebildet ist. Der Hohlraum 32 ist über ein Ventil mit einer Ringleitung verbunden und hierdurch mit Druck beaufschlagbar oder druckreduzierbar.

Bei dem in den Figuren gezeigten Ausführungsbeispiel umfasst die Antriebseinheit 16 eine Mehrzahl von Federmitteln 26, die kranzartig um die Dreh- und/oder Schwenkachse 14 angeordnet sind. Hierdurch ist es ermöglicht, eine zumindest nahezu homogene Kraftverteilung entlang des Trägers 28 der Klemmeinheit 10 zu erzielen.

Figur 1 zeigt einen Schnitt durch ein Ausführungsbeispiel der Sicherungsvorrichtung 2. Hierbei ist die Klemmeinheit 10 in einer Klemmstellung dargestellt. In der Klemmstellung greifen die Klemmmittel 20 in die Aussparung 18 der Aufnahmeeinheit 6 ein und wirken durch einen Reib- und/oder Kraftschluss derart, dass die erste Komponente 8 und zweite Komponente 12 relativ zueinander drehfest festgelegt sind. Hierbei durchdringen die Klemmmittel 20 parallel zur Dreh- und/oder Schwenkachse 14 verlaufende durchgehende Öffnungen 34 in der zweiten Komponente 12 und sind in der einstückig mit der ersten Komponente 8 ausgebildeten Aussparung 18 der Aufnahmeeinheit 6 reib- und/oder kraftschlüssig angeordnet.

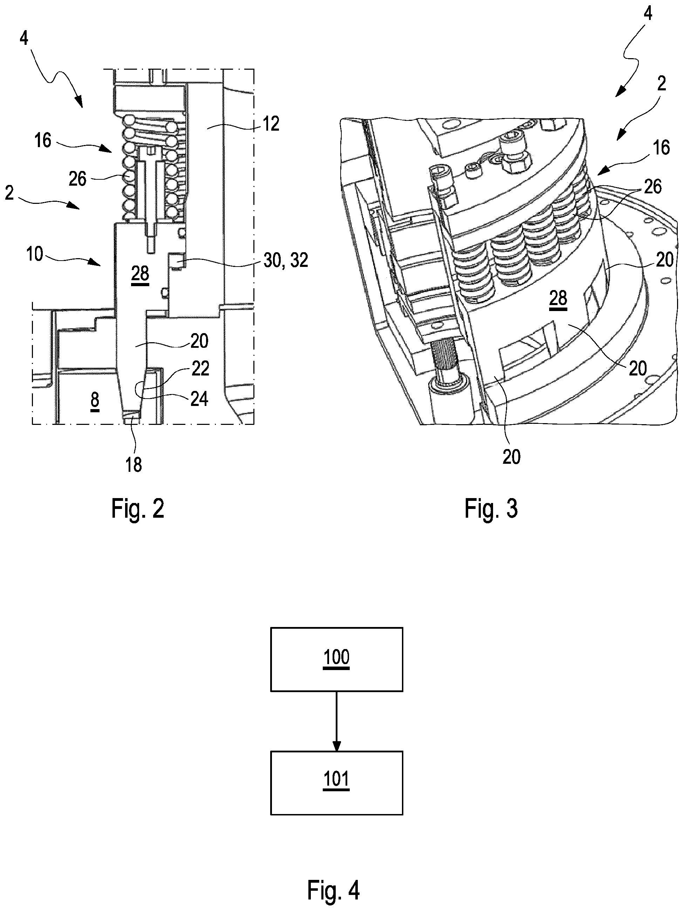

Figur 2 zeigt eine Detailansicht von Aufnahmeeinheit 6, Klemmeinheit 10 und Antriebseinheit 16.

Figur 3 zeigt eine perspektivische Detailansicht auf die Klemmeinheit 10. Aus Figur 3 wird ersichtlich, dass die Klemmeinheit 10 den ringartigen Träger 28 und eine Mehrzahl von zahnartig in Richtung auf die Aussparung 18 erstreckte Klemmmittel 20 umfasst.

Figur 4 zeigt ein schematisches Ablaufdiagramm eines Verfahrens zum Betreiben einer Sicherungsvorrichtung. Bei dieser wird in einem ersten Schritt 100 eine Auslösebedingung durch eine einer Steuereinheit 36 zugeordnetes Sensormittel 38 erfasst. Steuereinheit 36 und Sensormittel 38 sind in Figur 1 nur schematisch dargestellt.

In einem weiteren Schritt 101 wird die Antriebseinheit 16 zum Überführen der Klemmeinheit 10 von der Freigabestellung, in der die erste Komponente 8 und die zweite Komponente 12 für ein Bewegen, insbesondere Drehen, relativ zueinander freigegeben sind, in eine Sperrstellung, in der die Klemmeinheit 10 in die Aufnahmeeinheit 6 reib- und/oder kraftschlüssig eingreift und die erste Komponente 8 und die zweite Komponente 12 gegen ein Bewegen relativ zueinander festlegt.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Sicherungsvorrichtung
- 4: Gegenstand
- 6: Aufnahmeeinheit
- 8: erste Komponente
- 10: Klemmeinheit
- 12: zweite Komponente
- 14: Dreh- und/oder Schwenkachse
- 16: Antriebseinheit
- 18: Aussparung
- 20: Klemmmittel
- 22: Führungsabschnitt
- 24: Aufnahmeabschnitt
- 26: Federmittel
- 28: Träger
- 30: Sperrmittel
- 32: Hohlraum
- 34: durchgehende Öffnung
- 36: Steuereinheit
- 38: Sensormittel

## Patentansprüche

1. Sicherungsvorrichtung (2) für einen drehgelagerten Gegenstand (4), wie Manipulator, mit mindestens einer Aufnahmeeinheit (6), die an einer ersten Komponente (8) des Gegenstands (4) drehfest festgelegt ist, mit mindestens einer Klemmeinheit (10), die an einer zweiten Komponente (12) des Gegenstands (4), die manuell oder mittels eines Drehantriebs, insbesondere Direktantriebs, relativ zur ersten Komponente (8) über ein drehgelagertes Gelenk um eine Dreh- und/oder Schwenkachse (14) bewegbar ist, drehfest festgelegt ist, und mit mindestens einer Antriebseinheit (16), durch die die Klemmeinheit (10) von einer Freigabestellung, in der die erste Komponente (8) und die zweite Komponente (12) für ein Drehen relativ zueinander freigegeben sind, parallel zur Dreh- und/oder Schwenkachse (14) in eine Klemmstellung überführbar ist, in der die Klemmeinheit (10) in die Aufnahmeeinheit (6) reib- und/oder kraftschlüssig eingreift, und die erste Komponente (8) und die zweite Komponente (12) gegen ein Drehen um die Dreh- und/oder Schwenkachse (14), relativ zueinander festlegt.

2. Sicherungsvorrichtung (2) nach Anspruch 1, **dadurch gekennzeichnet, dass** die mindestens eine Aufnahmeeinheit (6), mindestens eine konzentrisch zur Dreh- und/oder Schwenkachse (14) verlaufende und in Richtung der Dreh- und/oder Schwenkachse (14) erstreckte Aussparung (18) umfasst und/oder dass die mindestens eine Klemmeinheit (10) mindestens Klemmmittel (20) umfasst, das in die Aussparung (18) bewegbar und reib- und/oder kraftschlüssig unmittelbar anliegend anordenbar ist.

3. Sicherungsvorrichtung (2) nach Anspruch 2, **dadurch gekennzeichnet, dass** das mindestens Klemmmittel (20) der Klemmeinheit (10) auf der der Aussparung (18) der Aufnahmeeinheit (6) zugewandten Seite einen, insbesondere sich verjüngenden, Führungsabschnitt (22) und/oder dass die Aussparung (18) der Aufnahmeeinheit (6) auf der dem Klemmmittel (20) der Klemmeinheit (10) zugewandten Seite einen, insbesondere trichterartig ausgebildeten, Aufnahmeabschnitt (24) umfasst.

4. Sicherungsvorrichtung (2) nach Anspruch 2 oder 3, **dadurch gekennzeichnet, dass** der Führungsabschnitt (22) des Klemmmittels (20) und/oder der Aufnahmeabschnitt (24) der Aussparung (18) bezüglich der Dreh- und/oder Schwenkachse (14) einen Winkel von 0° bis 30°, insbesondere 5° bis 25°, insbesondere 10° bis 20° umfasst und/oder dass der Führungsabschnitt (22) des Klemmmittels (20) und/oder der Aufnahmeabschnitt (24) der Aussparung (18) eine Oberfläche und/oder eine Oberflächenbeschichtung mit einem Reibwert zwischen 0,05 und 0,8, insbesondere zwischen 0,1 und 0,5, umfasst.

5. Sicherungsvorrichtung (2) nach mindestens einem der vorhergehenden Ansprüche, **dadurch gekennzeichnet, dass** die Antriebseinheit (16) mindestens ein pneumatisches, hydraulisches und/oder mechanisches spannbares Federmittel (26), insbesondere einen hydraulischen oder pneumatischen Zylinder und/oder ein Federelement, umfasst, das das mindestens eine Klemmmittel (20) mit einer Spannkraft in die Klemmstellung spannt und/oder dass die Antriebseinheit (16) mindestens ein pneumatisches, hydraulisches und/oder mechanisches wirksames Sperrmittel (30) umfasst, das das mindestens eine Klemmmittel (20) in der Freigabestellung festlegt.

6. Sicherungsvorrichtung (2) nach Anspruch 5, **dadurch gekennzeichnet, dass** das Sperrmittel (30) der Antriebseinheit (16) in einer Grundstellung eine der Spannkraft des Federmittels (26) entgegenwirkende und gleich große Rückstellkraft umfasst, mit der das Sperrmittel (30) auf das Klemmmittel (20) wirkt und durch Kräftegleichgewicht in der Freigabestellung hält, und dass das Sperrmittel (30) in einer Notstellung eine bezüglich der Grundstellung reduzierte Rückstellkraft umfasst und das Klemmmittel (20) zum Überführen in die Klemmstellung freigibt.

7. Sicherungsvorrichtung (2) nach Anspruch 5 oder 6, **dadurch gekennzeichnet, dass** das Sperrmittel (30) ein mit Druck beaufschlagbares, hydraulisch oder pneumatisch wirksames Fluid umfasst, dass in einem, insbesondere konzentrisch um die Dreh- und/oder Schwenkachse (14) verlaufenden, zwischen Klemmmittel (20) der Klemmeinheit (10) und zweiter Komponente (12) des Gegenstands (4) angeordneten Hohlraum (32) anordenbar oder angeordnet ist und/oder dass die Antriebseinheit (16) eine Ringleitung und mindestens ein Ventil umfasst, durch das der Hohlraum (32) mit der Ringleitung in Fluidverbindung bringbar ist.

8. Sicherungsvorrichtung (2) nach mindestens einem der vorhergehenden Ansprüche, **gekennzeichnet durch** mindestens eine Steuereinheit (36), durch die zumindest die Rückstellkraft des Sperrmittels (30) der Antriebseinheit (16) zum Überführen des mindestens einen Klemmmittels (20) in die Klemmstellung einstellbar ist, insbesondere durch die das Ventil zum Öffnen und Schließen ansteuerbar ist, und durch mindestens ein, der mindestens einen Steuereinheit (36) zuordenbares oder zugeordnetes, Sensormittel (38) durch das zumindest eine Auslösebedingung zum Überführen des Sperrmittels (30) von der Grundstellung in die Notstellung erfassbar ist und/oder durch das ein Druck im Hohlraum (32) erfassbar ist.

9. Sicherungsvorrichtung (2) nach mindestens einem der vorhergehenden Ansprüche, **dadurch gekennzeichnet, dass** die Klemmeinheit (10) eine Mehrzahl von Klemmmitteln (20) umfasst, die an einem ringartigen Träger (28) angeordnet sind und/oder dass die zweite Komponente (12) eine Mehrzahl von parallel zur Dreh- und/oder Schwenkachse (14) erstreckte durchgehende Öffnungen (34) umfasst, in der die Mehrzahl von Klemmmitteln (20) angeordnet sind, wobei der ringartige Träger (28) in der Freigabestellung zur zweiten Komponente (12) beabstandet und in der Klemmstellung bezüglich der Freigabestellung in Richtung zweiter Komponente (12) bewegt ist und/oder an der zweiten Komponente (12) anliegt.

10. Sicherungsvorrichtung (2) nach mindestens einem der vorhergehenden Ansprüche, **dadurch gekennzeichnet, dass** die Antriebseinheit (16) eine Mehrzahl von Federmitteln (26) umfasst, die kranzartig, und insbesondere konzentrisch, um die Dreh- und/oder Schwenkachse (14) angeordnet sind und gemeinsam die Klemmeinheit (10), insbesondere an dem ringartigen Träger (28) anliegend, in die Klemmstellung spannen.

11. Sicherungsvorrichtung (2) nach mindestens einem der vorhergehenden Ansprüche, **dadurch gekennzeichnet, dass** die mindestens eine Aufnahmeeinheit (6) und die erste Komponente (8) ein gemeinsames Bauteil umfassen und/oder dass die Aufnahmeeinheit (6) einen Flansch umfasst, der mittelbar oder unmittelbar und drehfest an der ersten Komponente (8) lösbar oder unlösbar festlegbar oder festgelegt ist.

12. Verfahren zum Betreiben einer Sicherungsvorrichtung (2) eines drehgelagerten Gegenstands (4), wie Manipulator, insbesondere Industrieroboter, insbesondere mit Direktantrieb, der mindestens eine Aufnahmeeinheit (6), die an einer ersten Komponente (8) des Gegenstands (4) drehfest festgelegt ist, der mindestens eine Klemmeinheit (10), die an einer zweiten Komponente (12) des Gegenstands (4), die manuell oder mittels eines Drehantriebs, insbesondere Direktantriebs, relativ zur ersten Komponente (8) über ein drehgelagertes Gelenk um eine Dreh- und/oder Schwenkachse (14) bewegbar ist, drehfest festgelegt ist, und der mindestens eine Antriebseinheit (16) umfasst, mit den Schritten:
a. Erfassen einer Auslösebedingung durch ein der Steuereinheit (36) zugeordnetes Sensormittel (38);
b. Ansteuern der Antriebseinheit (16) zum Überführen der Klemmeinheit (10) von einer Freigabestellung, in der die erste Komponente (8) und die zweite Komponente (12) für ein Bewegen, insbesondere Drehen, relativ zueinander freigegeben sind, in eine Sperrstellung, in der die Klemmeinheit (10) in die Aufnahmeeinheit (6) reib- und/oder kraftschlüssig eingreift, und die erste Komponente (8) und die zweite Komponente (12) gegen ein Bewegen relativ zueinander festlegt.
